Europäisches Patentamt

European Patent Office

Office européen des brevets

(11) Publication number: 0 401 953
A2

## EUROPEAN PATENT APPLICATION

(21) Application number: 90300745.8

(22) Date of filing: 24.01.90

(51) Int. Cl.5: G02C 7/02

(30) Priority: 07.06.89 US 362691

(43) Date of publication of application:
12.12.90 Bulletin 90/50

(84) Designated Contracting States:
AT BE CH DE DK ES GR IT LI LU NL SE

(71) Applicant: THEORETICAL OPTICS, INC.
1312 Pecan Street, P.O. Box 38003
Colorado Springs, Colorado 80937(US)

(72) Inventor: Tovi, Murray
1312 Pecan Street
Colorado Springs, Colorado 80904(US)

(74) Representative: Goodanew, Martin Eric et al
MATHISEN, MACARA & CO. The Coach
House 6-8 Swakeleys Road
Ickenham Uxbridge UB10 8BZ(GB)

(54) Laminated beam splitting optical system with reflective medium.

(57) A method of restoring the coherent light transmitting property of a first plate-like transparent medium which has a specific refractive index and an irregular surface that produces light scattering image distortion is described which comprises the steps of applying a clear hardenable plastics material to the said irregular surface, the plastics material having a refractive index substantially equal to the refractive index of the transparent medium and then applying a surface of a second transparent medium directly to the plastics material in adhering relationship thereto, one of the opposing surfaces of the second transparent medium being smooth and becoming the outside surface of a laminate formed by the first transparent medium, the plastics material and the second transparent medium.

In addition an optical structure (2) is provided comprising a first light transmitting plate member (6) having a smooth exterior surface (26) and an opposing inner surface (12) sculpted with forms or figures topographically contouring the inner surface (12); a second light transmitting plate member (8) secured to the inner surface (12) of the first plate member (6) forming a laminate; and a light reflective medium (10) carried by one of the plate members (6,8). The optical system (2) described transmits coherent light through the entire body of the system and reflects light from the contoured coating to create an image of the bas relief object to an observer.

Fig.5.

Xerox Copy Centre

## LAMINATED BEAM SPLITTING OPTICAL SYSTEM WITH REFLECTIVE MEDIUM

The present invention relates to a method of restoring the coherent light transmitting property of a plate-like transparent medium having surface irregularities that would otherwise result in light scattering image distortion and to optical systems capable of producing desired reflections as a result of deliberate sculpting of a surface of a transparent laminate so that from one side of the laminate may be seen a three-dimensional image sculpted in one of the laminae while transmitting coherent light through the optical system.

An optical system in the form of an eyeglasses lens with somewhat similar results, but in only two dimensions, is the subject of prior Letters Patent, however the present invention offers not only a reflective image with three-dimensional and bas relief depth but accomplishes the result with greater simplicity and effectiveness than the prior art.

One such prior art document is U.S. Patent No. 4,715,702 which discloses a structure for providing a decorative pattern over the surface of sunglasses. The structure combines a positive, two-dimensional, decorative pattern imprinted on a first lens layer, a reflective layer, and a third layer incorporating a negative decorative pattern. The decorative pattern is apparent to an observer as a flat image, but the negative pattern cancels the image for the wearer who then sees only a uniform colour or hue that does not interfere with his vision or cause a distraction.

Other patents which disclose eyeglasses in which characters or symbols are applied to the lens surfaces are U.S. Patent Nos. 4,329,378; 4,145,125 and 2,281,101.

Laminated and coated lenses for preventing glare, such as are found in U.S. patents 2,675,740; 2,230,009 and 4,320,939 share some of the structural aspects of the present invention but do not teach its methods or details of its structure.

According to a first aspect of the present invention there is provided a method of restoring the coherent light transmitting property of a first plate-like transparent medium which has a specific refractive index and an irregular surface that produces light scattering image distortion, characterised by the steps of applying a clear hardenable plastics material to the said irregular surface, the plastics material having a refractive index similar to the refractive index of the transparent medium; and applying a surface of a second transparent medium directly to the plastics material in adhering relationship thereto, one of the opposing surfaces of the second transparent medium being smooth and becoming the outside surface of a laminate formed by the first transparent medium, the plastics material and the second transparent medium.

According to a second aspect of the present invention there is provided an optical structure comprising a first light transmitting plate member having a smooth exterior surface characterised by an opposing inner surface sculpted with forms or figures topographically contouring the said inner surface; a second light transmitting plate member secured to the said inner surface of the first plate member forming a laminate; and a light reflective medium carried by one of the plate members.

Embodiments of the present invention will now be described by way of example with particular reference to optical systems in the form of sunglasses and with reference to the accompanying drawings in which:

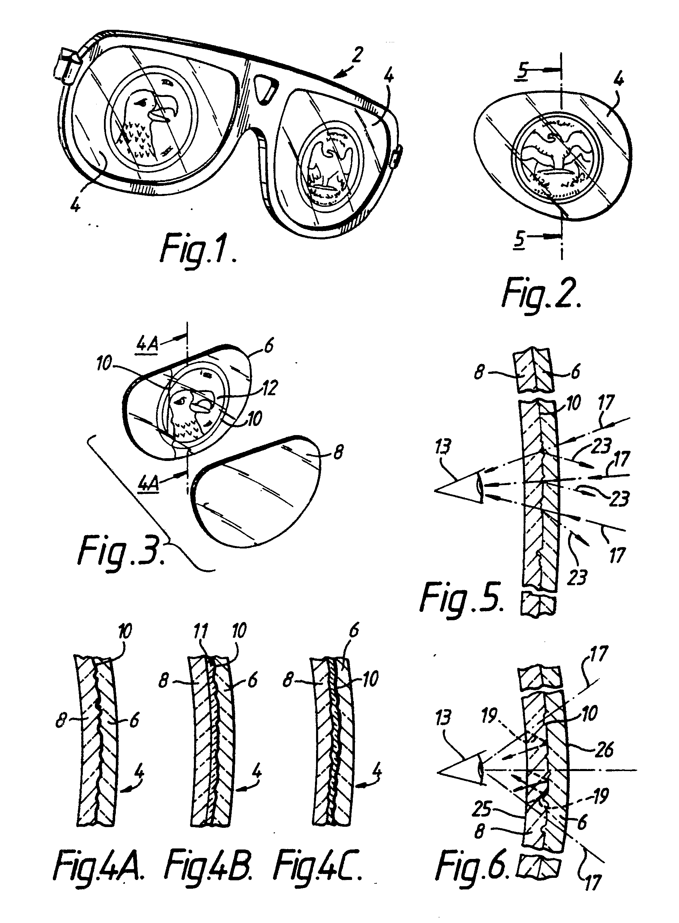

Figure 1 is a perspective view of the lenses of a pair of sunglasses showing reflected bas relief images as they would appear to an observer;

Figure 2 is a front elevational view of a single lens of the sunglasses of Figure 1;

Figure 3 is an exploded view from the rear of a lens showing a sculpted inside surface of an anterior lens plate and a posterior lens plate;

Figure 4A is an enlarged fragmentary cross-sectional view illustrating a first lens construction where the anterior plate of the lens has been injection moulded with the bas relief sculpting moulded into the plate and where the posterior plate is cast directly against a reflective coating which is applied to the inner sculpted surface of the anterior plate, the reflective coating being shown by the dark line between the lens plates;

Figure 4B is an enlarged fragmentary cross-sectional view, illustrating a second lens construction where the posterior lens is not sculpted to fit against the inner surface of the anterior lens plate, but is smooth on both sides and is adhered to the anterior lens plate by a clear adhesive which has a refractive index similar to that of the lens plate;

Figure 4C is an enlarged fragmentary cross-sectional view illustrating a third lens construction in which the posterior lens plate is contoured to form a mating counterpart of the anterior plate and is attached thereto by a means of clear adhesive with a similar refractive index;

Figure 5 is a fragmentary cross-sectional view taken along line 5-5 of Figure 2, showing diagrammatically light beams which enter the lens and which are transmitted to the eye of a wearer of the sunglasses, and showing that portion of the light beam which is reflected by an inner reflective film which is coated on the inner surface of the anterior lens plate; and

Figure 6 is a view similar to Figure 5, except that the light beams which are depicted as entering the lens are shown as being reflected by the outside surface of the posterior lens plate and then re-reflected by a reflective interior micro-thin coating in order to scatter the reflected light and avoid double images to the eye of the wearer.

A light transmitting plate, such as a glass plate, for example, which has a scratched or sculpted surface may be reconstituted as a surface through which light is transmitted as a coherent beam, making objects seen through the glass appear clear instead of distorted. The reconstitution need not necessarily involve physical remedial alteration of the light scattering distortions on the original plate surface. The modification may rather involve only the filling in of the scratches, contours and interstices of the light distorting surface with a hardenable plastic material having the same or similar refractive index to that of the material being corrected and, once filled in, the establishing on the plastic material of a smooth outer surface so that light being transmitted through that surface will not be scattered with the resultant image distortion.

The plastic filler materal may be a state of the art clear liquid optical adhesive with a sufficiently low viscosity to completely fill and occupy the interstices of the irregular light distorting surface. While the viscosity of such a material may be conducive to a self-leveling flow before curing, this alone cannot produce the smooth surface required for the transmission of undistorted light. Accordingly, it is beneficial to actually produce the smooth surface of the viscous fluid filler by placing next to it in adhesive relationship a clear piece of transparent material, such as glass, which has at least one smooth surface which will become the outer surface of the laminate created by the first glass plate, the adhesive and the second plate of glass.

Having provided a method by which the so called scratched or sculpted glass plate can be made to transmit an undistorted image by the foregoing process of filling in and then backing the inner filler layer with another clear plate, it is also possible to make visible again the sculpted surface of the first plate by adding to that surface a reflective material. If the reflective material is very thin, such as in the order of microns, it can be made semi-transparent. That is, light will pass through the reflective material in a substantially coherent manner even though it may have a different index of refraction than the plates of glass or adhesive. Depending upon the thickness of the reflective material and its other characteristics, it will reflect some of the light passing through the laminate, which reflections will portray the image of whatever sculpting or surface distortion is present on the one plate.

The present invention therefore relates not only to the reconstitution or restoration of a light scattering or translucent surface into a coherent light transmitting system, but also it relates to a structure embodying the reverse of that teaching so as to produce desired reflections which are a function of purposeful distortion or sculpting of one of the light transmitting plates of the structure.

Almost by definition, when a surface is deliberately distorted a three-dimensional surface topography results. Accordingly, a variety of three-dimensional portrayals, including bas relief, may be the subject of the reflective image seen by an observer.

An example of sunglasses 2 having lenses 4 in accordance with this second aspect of the present invention is shown in Figure 1 of the drawings. Each of the lenses 4 comprises a laminated sandwich consisting of a front, or anterior, lens plate 6, a rear, or posterior lens plate 8, the latter occupying a position on the inside of the total lens structure next to the eye of the wearer, and a micro-thin layer 10 disposed between the anterior and posterior lens plates 6 and 8.

The bas relief object which is chosen to be imaged by reflected light is used as a casting surface for forming the topography of the interior face 12 of one of the lens plates, which is shown by way of example in the series of Figures 4A,4B and 4C as being the anterior plate 6. The surface irregularities and undulations which form the contour of the pattern object are transferred directly to the interior face 12 by the process of casting or moulding the lens plate 6, which can be of glass or a plastics material.

To the topographically contoured surface of the interior face 12 of the anterior plate 6 is added, by well-known deposition methods, the micro-thin layer 10 of a light reflective material, such as gold. In place of a deposited reflective inner layer, one of the lens plates itself can be tinted to provide a similar result.

Several methods would be suitable for formulating the posterior lens plate. One such process is to cast it directly against the interior reflective coated surface 12 of the anterior lens plate 6 as shown in Figure 4A. It is to be understood that anterior and posterior designations are exemplary only and that a reversal of the parts would produce the same result.

A second method involves the separate injection moulding of the posterior lens plate with its inside or front facing surface moulded so as to provide a matching surface fit with the inside or rear facing surface 12 of the anterior lens plate 6 as shown in Figure 4C. By a matching surface fit, it is meant that the peaks and valleys of one surface are counterparts of the peaks and valleys of the mating surface of the other plate. A micro-thin layer 10 of reflective material is again coated on the inner surface of the anterior plate as indicated by a thick dark line, and the contoured posterior plate 8 is then laminated to the anterior plate with a clear adhesive 11.

The methods illustrated in Figures 4A and 4C are essentially similar in result and differ only in the actual method of manufacture and fabrication.

A third method of construction yields yet another variation in the product. The posterior lens plate can be smooth on both of its opposing surfaces and laminated to the irregular coated inside surface 12 of the anterior plate 6 with an adhesive 11 which will fill the irregularities of the inside surface 12 of the anterior plate 6 and form an interface between the anterior and posterior plates as shown in Figure 4B, resembling, except for the presence of the reflective coating layer 10 on the anterior plate, the structure of the first aspect of the present invention.

Obviously, the construction of the Figure 4B embodiment is the simplest and least expensive because the second plate does not receive the same sculpting as the first plate. The method of Figure 4B, however, would not be practical when the refractive index of the adhesive layer 11 cannot be matched to the refractive index of the anterior and posterior plates 6 and 8. With a mismatch of indices, it becomes important to reduce the thickness of the adhesive layer to the absolute minimum in order to reduce the distortion produced by the mismatch of the refractive indices. The more similar the refractive index of the plastic adhesive layer 11 is to the refractive index of the plates 6 and 8, the thicker the layer may be. On the other hand, if the indices are not similar then the thickness of the layer 11 must be thinner, creating in the extreme the necessity for the second plate 8 to have the same topography, but in reverse or negative, to that of the inner surface 12 of the anterior plate 6. Hence an inverse relationship exists between the match of the indices and the thickness of the adhesive layer 11. The greater the mismatch, the thinner the layer. The embodiments shown in Figures 4A and 4C will accommodate a reduced thickness of adhesive layer. It should be noted that the adhesive layer of Figure 4C is diagrammatic only and is not intended to be shown as proportional to the thickness of the adhesive layer of Figure 4B.

Regardless of the method of joining the two plates of the lens 4, a light beam 17 which enters the lens 4 will be split at the point of incidence with the reflective film 10, a portion of the light passing as coherent light through the film 10 to the eye 13 of the wearer, and a portion 23 of the total light energy being reflected by the irregular surface of the imaging topography formed by the coating 10 on the inside surface of one of the lens plates. The reflected portion of the light 23 will produce the bas relief image of the cast object in the eye of an observer looking at the lens from the front.

Even though, as has been pointed out, one plate of the lens system does not necessarily need to be the sculpted counterpart of the first in order to provide the lens structure with beam splitting properties, it is necessary that there be a second plate as the outside layer of the sandwich construction. The outside plate, even though possibly smooth on both sides, functions to re-focus the light waves to produce the coherent image of the transmitted light.

The wearer of the glasses does not see an image of the pattern fixed in the lens because the light entering the lens from the rear, or wearer's side, is minimal compared to the coherent light being transmitted through the lens which comes from sources in front of it. On the other hand, from the observer's side of the lens, there is significant light entering the lens and the portion of that total light which is the reflected light is sufficient to produce a clear image of the three dimensional object embedded in the lens structure.

In speaking of three-dimensional objects or patterns fixed to the inside of the lens, it is to be understood that the bas relief produced by the face of a coin is only one example. Etching of the inside surface of one of the plates by scratching or similar methods would also produce a three-dimensional image, corresponding to the depth of the abrasion.

In addition to reflecting the bas relief image, the interior layer 10 serves another useful purpose by eliminating the need for anti-reflective coatings, such as magnesium fluoride, to be placed on the outside surfaces of the lenses. As may be clearly seen in Figure 6, a portion 19 of the light energy 17 entering the lens and passing through the film 10 will be reflected back into the lens by its rear facing exterior surface 25. Normally, this reflected light 19 will then be re-reflected from the forward facing exterior surface 26 of the lens, producing distracting images or hot spots to the wearer. In the construction of the present invention, however, the irregular surface of the reflecting film 10 acts to scatter and re-reflect the light 19, producing no image to the wearer and eliminating the need for an anti- reflective coating on the exterior surfaces 25 and 26 of the lens.

Using a coin as exemplary of other similar impression-creating devices or objects, the second aspect of the present invention can be summarized as including a first lens portion or plate having the traditionally polished outside surface but whose inside surface is moulded in the image of one face of the coin. On this irregular bas relief surface is deposited a micro-thin reflective film, such as gold, or the sculpted plate may itself be tinted to provide a reflective medium. A second lens plate is laminated to the micro-thin reflective layer or to the plate having the embedded tinting, creating, in the first case, a sandwich structure wherein the surface topography of the middle micro-thin reflective layer corresponds to, and is a counterpart of, the three-dimensional bas relief surface of the object to be portrayed, the coin's face in this example. The outside surface of the first and second lens portions are smooth and are parallel to one another, unless the lens is intended to be a power lens in which case one such surface is made convex or concave to meet an optometric prescription, including bifocals. It should be noted that opposing non-parallel outside lens surfaces do not affect the bas relief reflection, except for the magnification or diminution produced by the lens. The reflection is only a function of the inner reflective surface or tinting medium of the laminated structure. The laminated lens structure acts as a beam splitter, accommodating transmission through the lens of coherent undistorted light from objects to be seen through the lens and reflecting scattered light from the bas relief image of the object whose surface impression is fixed on the inside surface of one of the lens plates and made reflective by a reflective medium. The colour of the reflected image will depend on the material used as the intermediate laminate or reflective layer between the anterior and posterior plates or the colour of the reflected image may be controlled by the colour tinting of one of the plates itself.

Thus it will be apparent to those skilled in the art that the present invention provides a method whereby a scratched or otherwise surface-distorted light transmitting plate may be reconstituted, without surface reclamation or alteration, so as to pass coherent light waves without the scattering effect produced by the surface distortion.

It will also be apparent that the described embodiments provide optical systems capable of transmitting coherent undistorted light images while at the same time producing a three-dimensional image to an observer by means of the light reflected from an interior contoured surface of one of the layers of the systems.

In addition, the described embodiments provide lens assemblies that substantially eliminate secondary light reflection within the lens without the use of outside surface anti-reflective coatings, at least over the portion of the lens having a light scattering surface formed within the interior of the lens system for image reflection purposes. Furthermore the described embodiments lend themselves to construction from plastics components which may be dipped to create graduation tinting, especially when the lenses are applied to sunglasses.

It will be apparent that the optical system of the present invention, while usefully applied to lenses, may be employed in a large number of different applications which are not lens related, including windows, semi-transparent mirrors, closed circuit television discrete enclosures, furniture tops and displays.

## Claims

1. A method of restoring the coherent light transmitting property of a first plate-like transparent medium (6) which has a specific refractive index and an irregular surface (12) that produces light scattering image distortion, characterised by the steps of applying a clear hardenable plastics material to the said irregular surface (12), the plastics material having a refractive index similar to the refractive index of the transparent medium (6); and applying a surface of a second transparent medium (8) directly to the plastics material in adhering relationship thereto, one of the opposing surfaces (25) of the second transparent medium (8) being smooth and becoming the outside surface of a laminate formed by the first transparent medium (6), the plastics material and the second transparent medium (8).

2. A method in accordance with claim 1, characterised in that the plastics material is of sufficiently low viscosity to completely occupy the interstices of the irregular surface (12).

3. A method in accordance with claim 1 or claim 2, characterised in that the surface of the second transparent medium (8) that contacts the plastics material is also irregular.

4. A method in accordance with claim 1 or claim 2, characterised in that the surface of the second transparent medium (8) that contacts the plastics material is smooth.

5. A method in accordance with any preceding claim, characterised in that the thickness of the plastics material is inversely proportional to the mismatch of the refractive index of the plastics material to that of the transparent media (6,8).

6. An optical structure comprising a first light transmitting plate member (6) having a smooth exterior surface (26) characterised by an opposing inner surface (12) sculpted with forms or figures topographically contouring the said inner surface (12); a second light transmitting plate member (8) secured to the said inner surface (12) of the first plate member (6) forming a laminate; and a light reflective medium (10) carried by one of the plate members (6,8).

7. An optical structure in accordance with claim 6, characterised in that the first and second light transmitting plate members (6,8) are secured together by a clear adhesive (11) having a refractive index similar to that of the plate members (6,8).

8. An optical structure in accordance with claim 6, characterised in that the light reflective medium (10) is a coating carried by the inner surface (12) of the first of the light transmitting plate members (6) and the second light transmitting plate member (8) is provided with a smooth outer surface (25) and an inner surface whose topography is the counterpart of the coated inner surface (12) of the first plate member (6).

9. An optical structure in accordance with claim 7, characterised in that the second light transmitting plate member (8) is provided with a smooth outer surface (25) and an inner surface whose topography is the counterpart of the inner surface (12) of the first plate member (6).

10. An optical structure in accordance with claim 6 or claim 7, characterised in that the second light transmitting plate member (8) has opposing surfaces which are both smooth.

11. An optical structure in accordance with any of claims 6 to 10, characterised in that the light reflective medium (10) is a semi-transparent layer of metal deposited on one of the plate members (6,8).

12. An optical structure in accordance with any of claims 6,7,9 and 10, characterised in that the light reflective medium (10) is colour tinting embedded in one of the plate members (6,8).

Fig.1.

Fig.2.

Fig.3.

Fig.5.

Fig.4A. Fig.4B. Fig.4C.

Fig.6.